# EUROPEAN PATENT APPLICATION

(11) **EP 4 653 218 A1**
(43) Date of publication of application: **26.11.2025**
(21) Application number: 24177672.3
(22) Date of filing: 23.05.2024
(51) Int. Cl.: B60K 1/04

(54) **ELECTRIC VEHICLE WITH IMPROVED ACCESS TO SERVICEABLE COMPONENTS**

(71) Applicant: VOLVO TRUCK CORPORATION, 405 08 Göteborg (SE)
(72) Inventor: JONSSON, Kasper, 417 57 GÖTEBORG (SE); MOCANOSKI, Dragan, 434 91 KUNGSBACKA (SE); GUIDEZ, Louis, 421 53 VÄSTRA FRÖLUNDA (SE); IRANNEZHAD, Mike, 413 30 GÖTEBORG (SE)
(74) Representative: Kransell & Wennborg KB

(57) **Abstract**

A battery mounting platform (303) for a plurality of battery packs for a heavy-duty electric vehicle is provided. The platform includes one or more plates (210, 260) mountable suspended from a chassis frame of the vehicle. The one or more plates provide a mounting platform for a plurality of battery packs (310, 320) for powering an electric traction of the vehicle. The one or more plates include cutouts (250, 252) through which serviceable components (340) of the battery packs may be removed without first separating the battery pack from the one or more plates. A corresponding heavy-duty electric vehicle including the chassis frame, the one or more plates and the battery packs are also provided.

## Description

### TECHNICAL FIELD

The disclosure relates generally to heavy-duty electric vehicles. In particular aspects, the disclosure relates to a platform for mounting of a plurality of battery packs for such a vehicle, with improved access to serviceable battery pack components. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Contemporary battery technology does not offer the same volumetric or gravimetric energy density as fuel-based alternatives. Installation of sufficient amounts of energy storage (usually in form of multiple battery packs) in heavy-duty electric vehicles is therefore challenging, as both the weight and volume available for such installation are often limited. In addition, it is also desirable that serviceable components of the battery packs are accessible and/or removable also after being installed in the vehicle, to facilitate things like service and regular maintenance.

The present disclosure aims at providing a solution for mounting of battery packs to a heavy-duty electric vehicle, that increases the energy storage density and simultaneously provides improved accessibility of serviceable components of the battery packs.

### SUMMARY

According to a first aspect of the present disclosure, there is provided a heavy-duty electric vehicle. The vehicle includes a chassis frame, a set of one or more plates each directly or indirectly mounted to the chassis frame, and a set of battery packs for powering an electric traction of the vehicle, and mounted to at least one of the one or more plates. For at least one battery pack of the set of battery packs, at least one serviceable component of the battery pack is removable from the battery pack. At least one plate of the one or more plates to which the battery pack is mounted is provided with at least one cutout, such that the at least one (serviceable) component can be taken out from the battery pack through the cutout without first separating the battery pack and the plate from each other.

The first aspect of the disclosure may seek to solve the problem of how to increase energy storage density in a heavy-duty electric vehicle, while also allowing for easy access to serviceable components of the battery packs. A technical benefit may include that by using a plate instead of e.g. individual mounting brackets between each battery pack and the chassis frame, the overall complexity (such as number of required parts, issues with individual tolerances, etc.), weight and cost are reduced, while volume-utilization is increased. In particular, the ability to mount battery packs on both the top and bottom side of the plate increases the number of battery packs that can be installed in the vehicle. The envisaged solution also allows for the plate and the battery pack to work together to increase the overall structural stability of the solution, allowing e.g. the housings of the battery packs to be more lightweight (using e.g. sheet metal instead of more heavy castings). Even more in particular, the cutout of the plate allows to remove the serviceable component from the corresponding battery pack without first having to e.g. dismount the plate from the vehicle and/or dismount the battery pack from the plate, which may facilitate servicing and maintenance of the battery pack by simple means. As will also be described in more detail later herein, mounting of battery packs on both sides of the plate may shift the vertical center of gravity of the installation to be more aligned with the plate and/or chassis frame, which may increase structural integrity of the installation during a crash and thereby improve also overall vehicle safety and allow for simpler crash protection designs.

Optionally in some examples, including in at least one preferred example, the at least one serviceable component is removable from the battery pack in a direction normal to a major extension plane of the plate, e.g. in one or both of an upward or downward direction when mounted to the plate. A technical benefit may include that the need to provide e.g. service openings/accesses on the lateral sides of the battery packs is thus removed, such that the sides may instead be built with focus on rigidity/strength and to improve crash resistance, and similar. Being able to remove a serviceable component upwards or downwards may also be beneficial for battery packs that are mounted horizontally in between one or more other battery packs, as removing such components e.g. to the side would then be difficult or not possible.

Optionally in some examples, including in at least one preferred example, the set of one or more plates may include a first plate mounted to the chassis frame using one or more mounting brackets.

Optionally in some examples, including in at least one preferred example, the first plate may be mounted to each of a pair of longitudinal beams of the chassis frame using one or more mounting brackets. A technical advantage may include that such mounting brackets may already be available for mounting of other devices to the chassis frame, such as for example a fifth-wheel platform or similar.

Optionally in some examples, including in at least one preferred example, the vehicle may further include one or more damping elements provided between the chassis frame and the one or more mounting brackets. A technical benefit may include that vibrations from the chassis frame may thus be prevented from entering into the mounting brackets.

Optionally in some examples, including in at least one preferred example, the vehicle may further include one or more damping elements provided between the one or more mounting brackets and the first plate. A technical benefit may include that vibrations in the mounting brackets may thus be prevented from entering into the first plate.

Optionally in some examples, including in at least one preferred example, the vehicle may further include one or more damping elements provided between the first plate and at least some of the battery packs. A technical benefit may include that vibrations in the plate may thus be prevented from entering into the battery pack(s).

Optionally, in some examples, including in at least one preferred example, the plate or plates may be made of steel. A thickness of a plate may be between 5 and 25 millimeters, preferably between 10 and 15 millimeters. In general, it is envisaged that the plates may not necessarily be very thick, as the structure of the battery packs will work in combination with the plate to create an overall strong structure. A technical benefit may include that by keeping the plates thin enough to provide some flexing, the plates can then move with the chassis as the chassis deforms due to being loaded, the vehicle travelling on uneven ground, and similar, and it is thus avoided to mount a more structurally rigid structure to a more structurally flexible structure.

Optionally in some examples, including in at least one preferred example, the first plate may be provided with cutouts at the chassis frame, to account for torsional deformations of the chassis frame. A technical benefit may include that this may further reduce the impact of such torsional deformations on the first plate and thereby also on the battery packs mounted thereto.

Optionally in some examples, including in at least one preferred example, the first plate may be provided with such cutouts at each of the longitudinal beams at a front side of the first plate (i.e. the side of the first plate facing towards the front of the vehicle) and at each of the longitudinal beams at a back side of the first plate (i.e. the side of the first plate facing towards the rear of the vehicle). A technical benefit may include that such an arrangement of the cutouts may optimize the reduction of torsional deformation impacting from the chassis frame on the first plate.

Optionally in some examples, including in at least one preferred example, the first plate may be mounted at a longitudinal center of the chassis frame. A technical benefit may include that torsional deformations of the chassis frame are minimal at the center of the chassis frame, which reduces the impact of such deformations on the first plate.

Optionally, in some examples, including in at least one preferred example, the set of battery packs may include a first subset of battery packs suspended from a bottom side of the first plate. A technical benefit may include that the space available below the chassis frame may thus be utilized to mount battery packs.

Optionally, in some examples, including in at least one preferred example, the battery packs of the first subset of battery packs may be oriented along a longitudinal direction of the chassis frame. A technical benefit may include that connectors for e.g. electric power and/or cooling fluid, that are normally provided at one or both of the short ends of the battery packs may thus be better protected from side impact forces in case of e.g. a vehicle crash/collision. In addition, such an orientation allows to avoid routing of any cables/hoses/conduits for electricity and/or cooling fluid on the outsides of the vehicle, and in particular allow to e.g. arrange such cables/hoses/conduits such that e.g. cooling fluid is routed to the front of the vehicle (where fans for cooling using vehicle speed are normally arranged), and such that cables for electric power are routed towards the back of the vehicle (where e.g. the electric traction is often arranged). By so doing, cooling fluid and electric power may be well separated, thus further increasing overall safety of the vehicle.

Optionally, in some examples, including in at least one preferred example, the battery packs of the first subset of battery packs may be oriented along a transverse direction of the chassis frame. A technical benefit may include that connectors for e.g. electric power and/or cooling fluid, that are normally provided at the one or both of the short ends of the battery packs, may thus be more easily accessible from outside of the vehicle.

Optionally, in some examples, including in at least one preferred example, the set of one or more plates may include also a second plate. The first subset of battery packs may be mounted to a top side of the second plate. For at least one battery pack of the first subset of battery packs, at least one serviceable component of the battery pack may be removable from the battery pack (in a downward direction), and the second plate may be provided with a cutout such that the at least one serviceable component of the battery pack may be taken out from the battery pack through the cutout of the second plate without first having to separate the battery pack of the first subset of battery packs and the second plate from each other. A technical benefit may include that such a second plate may add additional strength/rigidity to the installation, provide better protection from forces from below (such as impact by gravel or other dirt, and similar), and/or serve as a platform on which crash protection devices for e.g. side impact crashes may be provided, thus avoiding having to mount such devices directly to the battery pack themselves. This while the one or more cutouts of the second plate still allow serviceable components from the battery packs mounted to the second plate to be removed and thus maintaining the improved serviceability of the envisaged solution.

Optionally, in some examples, including in at least one preferred example, the set of battery packs may further include a second subset of battery packs mounted to a top side of the first plate. A technical benefit may include that more battery packs may thus be supported by the first plate, as both the top and bottom surfaces of the first plate may be used for such mounting.

Optionally, in some examples, including in at least one preferred example, the battery packs of the second subset of battery packs may be oriented along a longitudinal direction of the chassis frame.

Optionally, in some examples, including in at least one preferred example, at least one battery pack of the second subset of battery packs may be arranged between the longitudinal beams of the chassis frame. A technical benefit may include that the space formed between the longitudinal beams may also be used to mount battery packs, thus increasing the overall energy storage capability of the installation.

Optionally, in some examples, including in at least one preferred example, at least one battery pack of the second subset of battery packs may be arranged on a first lateral (e.g. left) side of the chassis frame, and at least one (other) battery pack of the second subset of battery packs may be arranged on an opposite second (i.e. right) side of the chassis frame. A technical benefit may include that by mounting battery packs on both sides of the chassis frame, an overall balance of the installation in terms of weight (distribution) may be improved.

Optionally, in some examples, including in at least one preferred example, the second subset of battery packs, the first plate and the cutouts of the first plate may extend outside of the first subset of battery packs in the longitudinal direction of the chassis frame. A technical benefit may include that the cutouts of the first plate may thus be accessible directly from below, without having to first move the first subset of battery packs, such that the serviceable components of the second subset of battery packs are more easily removable through the cutouts of the first plate. In some examples, this may apply also when there is provided the second plate below the first subset of battery packs, in which case the first plate, its cutouts and the second subset of battery packs may extend (in the longitudinal direction) also outside the second plate.

Optionally in some examples, including in at least one preferred example, a combined center of gravity of the first and second subsets of battery packs may align with the first plate and/or chassis frame in a vertical direction of the chassis frame (i.e. a top-down direction). As envisaged herein, "align" may not necessarily mean perfect alignment, but at least the ability to move the combined center of gravity closer to the first plate and/or chassis frame than what would be possible if e.g. not using the plate and/or only mounting battery packs on the top or bottom of the plate. A technical benefit may include that the installation is thus made safer in terms of a vehicle crash, or in particular in case the vehicle is hit by another vehicle or structure on its side. Improving the alignment of the center of gravity of the battery packs/plate with the chassis frame reduces the risks of the installation twisting and even being broken off the chassis frame in case of such an accident, which improves safety for both the driver and nearby objects and persons. The ability to better align the combined center of gravity of the battery packs in such a way follows from the use of the envisaged first plate, and the envisaged mounting of battery packs both on top of and from the bottom of the first plate.

Optionally in some examples, including in at least one preferred example, at least some battery packs of the set of battery packs may be provided with brackets for mounting to the at least one of the one or more plates. A technical benefit may include that such brackets may help to provide structural integrity both to the battery pack and also to the plate itself, thereby reducing the structural requirements of e.g. the battery pack housings. In addition, such brackets may be formed such that they extend somewhat outside of the battery pack, allowing for more easy access to e.g. screws, bolts, nuts, and similar, used to fix the bracket and battery pack to the plate.

Optionally, in some examples, including in at least one preferred example, the vehicle may further include at least one of a busbar or cable for transferring electric power to/from at least one battery pack, and a cooling fluid conduit for transferring cooling fluid to/from at least one battery pack, wherein the busbar/cable and/or cooling fluid conduit are/is arranged in a space formed between the chassis frame and the set of battery packs, such as e.g. in between the chassis frame (between its longitudinal beams), and/or between the chassis frame and one or more battery packs arranged on top of the first plate.

Optionally in some examples, including in at least one preferred example, the first and second subsets of battery packs mounted to the first plate may be individually removable from the first plate. Phrased differently, at least some battery packs of the first and second subsets of battery packs mounted vertically on top of/below each other may be individually removable from the first plate. A technical benefit may include that this allows for easier access and removal (or installation) of the battery packs, e.g. as part of a service or maintenance routine. If the vehicle is e.g. a box truck or have any other structure on top of the chassis frame in the area where the battery packs are installed, it is envisaged that the first plate allows the battery packs on top to be slid out after being released from the first plate, e.g. by sliding towards the front or rear of the vehicle and/or to the side of the vehicle.

Optionally in some examples, including in at least one preferred example, the battery packs may be provided with screws or bolts for mounting the battery packs to the at least one plate, and the at least one plate may include holes for receiving the screws or bolts of the battery packs. Vice versa, the battery packs may be provided with holes for receiving corresponding screws or bolts provided as part of the at least one plate. This may be for guiding each of the battery packs during the mounting of the battery packs to the at least one plate. A technical benefit may include that it becomes easier to install the battery packs to the at least one plate, as the battery packs will be sufficiently and correctly aligned with the at least one plate once the screws or bolts are positioned in the holes. The use of screws or bolts also allows for easy mounting and dismounting of the battery packs from the at least one plate using conventional tools. In some examples, both holes and screws (or bolts) may be provided on the battery packs and corresponding screw (or bolts) and holes on the at least one plate.

Optionally in some examples, including in at least one preferred example, the battery packs may include cooling fluid connectors on a front side in the longitudinal direction and electrical connectors on an opposite back side in the longitudinal direction, or vice versa. A technical benefit may be that just described above, namely the separation of cooling liquid and electricity, and/or the easier routing of cooling conductors and electrical conductors on opposite sides of the battery packs.

Optionally in some examples, including in at least one preferred example, the battery packs may include multiple groups of flat packs stacked on top of each other and then mounted to the at least one plate. A technical benefit may be that such flat packs are often found in smaller vehicles, such as automobiles, and being able to use such (smaller) flat packs also for heavy-duty vehicles such as trucks may improve production efficient and cost, as a single type of battery pack may be used to power both smaller and larger vehicles.

According to a second aspect, there is provided a battery mounting platform for a heavy-duty electric vehicle as described herein, including the set of one or more plates each directly or indirectly mountable to a chassis frame of the vehicle, wherein a set of battery packs for powering an electric traction of the vehicle is mountable to at least one of the one or more plates, and wherein at least one plate of the set of one or more plates is provided with at least one cutout, such that when the battery packs are mounted to the at least one plate, a serviceable component of at least one battery pack can be taken out from the battery pack through the cutout without first separating the battery pack and plate from each other.

According to a third aspect, there is provided an energy storage system for a heavy-duty electric vehicle as described herein, including the set of battery packs for powering an electric traction of the vehicle and the battery mounting platform of the second aspect, wherein the set of battery packs is mounted to at least one of the one or more plates.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates an example conventional chassis frame of a heavy-duty vehicle.
**FIG. 2** schematically illustrates an example plate and mounting bracket(s) for mounting of battery packs to the chassis frame of an electric heavy-duty vehicle as envisaged herein, according to one or more examples of the present disclosure.
**FIG. 3A** schematically illustrates an example battery pack with a removable serviceable component as envisaged herein, according to one or more examples of the present disclosure.
**FIG. 3B** schematically illustrates an example of how a plate used for mounting battery packs is provided with one or more cutouts for removal of the serviceable components of the battery packs as envisaged herein, according to one or more examples of the present disclosure.
**FIGS. 3C** **and** **3D** schematically illustrate examples of mounting of battery packs on both sides of a first plate as envisaged herein, according to one or more examples of the present disclosure.
**FIGS. 3E, 3F** **and** **3G** schematically illustrate examples of mounting of battery packs to both a first and second plate as envisaged herein, with one or more cutouts for removal of serviceable components from the battery packs also in the second plate, according to one or more examples of the present disclosure.
**FIGS. 4A, 4B** **and** **4C** schematically illustrate various example aspects of mounting battery packs to a plate using brackets, according to one or more examples of the present disclosure.
**FIG. 5** schematically illustrates examples of damping elements provided as part of the envisaged battery pack installation platform, according to one or more examples of the present disclosure.
**FIG. 6** schematically illustrates an example heavy-duty electric vehicle including the envisaged plate(s) for mounting of battery packs, according to one or more examples of the present disclosure.

### DETAILED DESCRIPTION

The detailed description set forth below provides information and examples of the disclosed technology with sufficient detail to enable those skilled in the art to practice the disclosure.

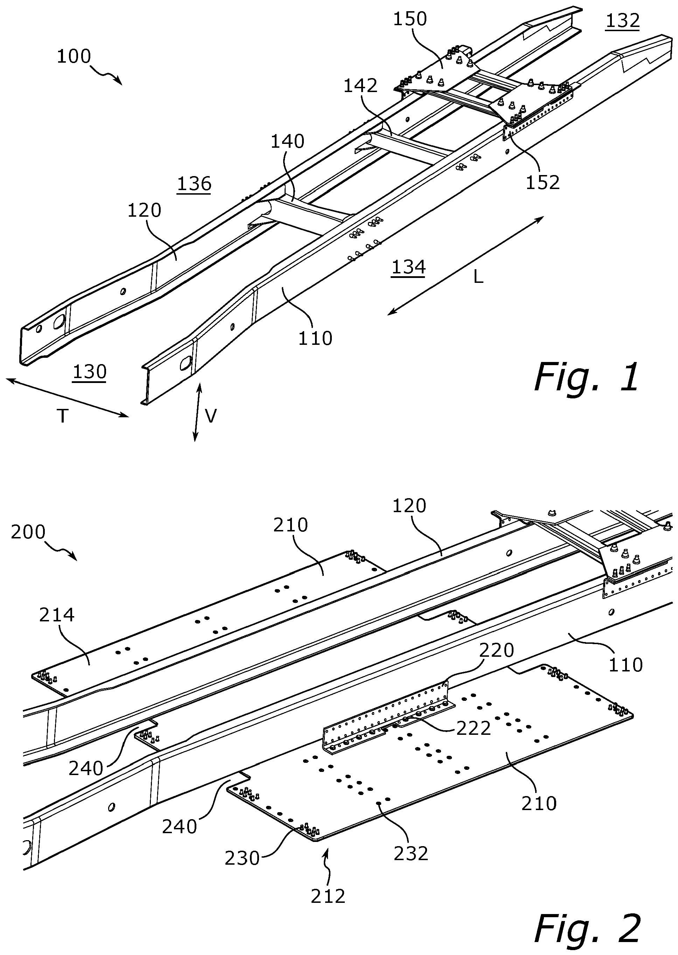

**FIG. 1** schematically illustrates a chassis frame 100 of a heavy-duty vehicle. The chassis frame 100 includes two longitudinal beams 110 and 120, i.e. a left beam 110 and a right beam 120 if seen towards a front side/end 130 of the chassis frame 100. The chassis frame 100 has a longitudinal direction (or axis) L extending between the front side 130 and an opposite back/rear side/end 132 of the chassis frame 100, a transverse direction (or axis) T extending perpendicular to the longitudinal direction L (between a left lateral side 134 and a right lateral side 136 of the chassis frame 100), as well as a vertical direction (or axis) V extending perpendicular to both the longitudinal direction L and the transverse direction T of the chassis frame 100. The chassis frame 100 may be provided with one or more cross bars/beams 140 and 142 extending between the longitudinal beams 110 and 120 in the transverse direction T. Whether any of the cross bars 140 and 142 are provided may for example be governed by whether the chassis frame 100 is for a vehicle supposed to be driven on flat, even ground, or whether e.g. the vehicle is an off-road vehicle supposed to be driven in terrain that requires further stabilization of the chassis frame 100. The chassis frame 100 may also, in some examples, be further equipped with a platform 150 for mounting of a so-called fifth-wheel connection, if the vehicle to which the chassis frame 100 belongs is e.g. supposed to tow a semitrailer or similar. The fifth-wheel platform 150 may be mounted to the (longitudinal beams 110 and 120) of the chassis frame 100 using mounting brackets 152.

With all components of the vehicle installed (not shown in FIG. 1), there may not be much space left for installation of battery packs, which thus poses a challenge when trying to electrify vehicles with chassis frames such as the chassis frame 100. For example, the space around the chassis frame 100 at its back/rear end 132 will likely be occupied by the suspension of the rear wheel axle or axles (in case of a boogie), while the space at the front of the chassis frame 100 will likely be occupied by e.g. the suspension of the front axle, the steering, the driver cabin, and similar. Other components such as storage boxes (for e.g. snow chains and/or tooling), electrical wire harnesses, and similar will also occupy some of the available space around/in the chassis frame 100, with the result that there may be very limited space available for installation of battery packs required to provide electrical power to the traction of the vehicle. Conventional solutions for installation of battery packs often includes each battery pack being individually mounted to the chassis frame 100 using individual mounting brackets, which introduces a lot of "overhead" in terms of material and weight that may not be used to store electric energy. Other conventional solutions include to first mount all battery packs together in a battery pack "matrix", and to then mount the whole matrix to the chassis frame 100. In case a particular battery pack requires service and/or maintenance, the whole matrix is often needed to be removed from the chassis frame 100 in order to provide access to the particular battery pack. In particular, battery packs may include serviceable components (such as electronic circuits, control circuits, and similar) that may be removed from the battery packs. However, if the battery packs are installed and packed tightly in the vehicle in order to increase overall energy storage density, access to such serviceable components may not be possible without first having to dismount the installation to free the battery pack in question, leading to increased service and/or maintenance time and complexity.

How the solution as envisaged herein improves upon such a situation will now be described in detail with reference first also to FIG. 2.

**FIG. 2** schematically illustrates an example of an envisaged improved platform solution 200 for mounting/installation of battery packs in a heavy-duty electric vehicle. As part of the solution 200, there is provided a first plate 210 that is suspended from the chassis frame 100 using one or more mounting brackets 220. The mounting brackets 220 may for example be similar to those 152 used to mount the fifth-wheel platform 150 to the chassis frame 100 as shown in FIG. 1. There may for example be one mounting bracket 220 arranged to mount the first plate 210 to the left longitudinal beam 110 of the chassis frame 100, and another mounting bracket 220 (not shown) arranged to mount the first plate 210 to the right longitudinal beam 120 of the chassis frame 100. In other examples, there may be multiple mounting brackets mounting the first plate 210 to the left beam 110 and multiple mounting brackets mounting the first plate 210 to the right beam 120, or e.g. a single mounting bracket mounting the first plate 210 to both beams 110 and 120, and similar. The mounting bracket(s) 220 may be configured to mount the first plate 210 to the outside of the respective beams 110 and 120, or the mounting bracket(s) 220 may be configured to mount the first plate 210 to the inside of the respective beams 110 and 120, or the mounting bracket(s) 220 may be configured to mount the first plate 210 to both inside and outside sides of the beams 110 and 120, and similar. The mounting bracket(s) 220 may for example be L-shaped, U-shaped, or have any other suitable shape allowing to mount the first plate 210 to the (longitudinal beams 110 and 120 of the) chassis frame 100. The mounting bracket(s) 220 may for example be secured to the first plate 210 using a plurality of screws, bolts or nuts 222 and similar. The mounting bracket(s) 220 may for example be secured to the respective beam 110 and 120 of the chassis frame 100 using screws, bolts, nuts, rivets, welding, and similar.

The first plate 210 is configured such that it may receive battery packs both on a bottom side 212 and on a top side 214 of the first plate 210. For this purpose, the first plate 210 may for example be provided with a plurality of screws, bolts or nuts 230 and/or a plurality of holes 232, that may be configured to match with corresponding holes and screws, bolts or nuts of e.g. brackets of the respective battery packs that are to be mounted on each side 212 and 214 of the first plate 210.

The first plate 210 is preferably mounted towards or at a longitudinal center of the chassis frame 100, as the effect of torsional deformations of the chassis frame 110 when e.g. driving the vehicle are likely to be reduced at that point. To further reduce the effect of such torsional deformations of the chassis frame 100, the first plate 210 may optionally be provided with one or more cutouts 240. The cutout(s) 240 may for example be located at the respective longitudinal beams 110 and 120 of the chassis frame 100, such as at a front end of the first plate 210 towards the front end 130 of the chassis frame 100 and/or at a back end of the first plate 210 towards the rear end 132 of the chassis frame 100. As generally used herein, an "end" of something is decided by its location/proximity in relation to something else, while a "side" of something is decided by in what direction its surface faces. Thus, a "front end" of the first plate 210 is not referring only to its "front side", but to parts of the first plate 210 arranged closer to the front end 130 of the chassis frame 100 than parts of the first plate 210 arranged closer to the rear end 132 of the chassis frame 100, and vice versa for the "back end" of the first plate 210.

The first plate 210 may for example have a thickness between 5 and 25 millimeters, such as between 10 and 15 millimeters, such as e.g. 10 millimeters. Other thicknesses of the first plate is of course also envisaged, but it is noted that the first plate 210 does not necessarily need to be very thick for multiple reasons. First, the addition of the battery packs will help to provide structural strength/rigidity and, second, the chassis frame 100 is likely to bend/flex/deform when driving the vehicle and it may be undesirable to fix a structurally very rigid entity to a less rigid entity. The weight of the first plate 210 may thus be low and adding of further weight to the vehicle is thus avoided. The first plate 210 may for example have a rectangular cuboid shape, or any other suitable shape where its extension in the horizontal plane is much larger than its extension in the vertical plane. Preferably, the first plate 210 is dimensioned and arranged such that it extends laterally on both sides of the chassis frame 100, and made sufficiently wide (i.e. in the transverse direction T of the chassis frame 100) to accept at least one battery pack on each side of the chassis frame 100. The length (i.e. in the longitudinal direction L of the chassis frame 100) of the first plate 210 may be decided based on e.g. a length of the battery packs that are to be mounted on top of the first plate 210, and be adapted to maximally utilize the available space provided below (and/or above) the chassis frame 100 for mounting of battery packs.

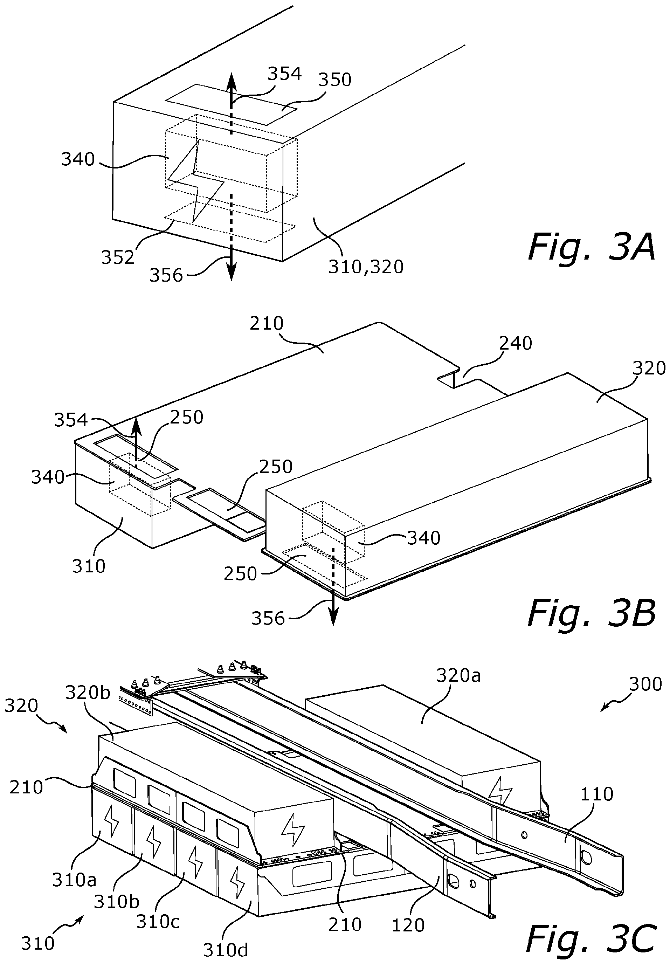

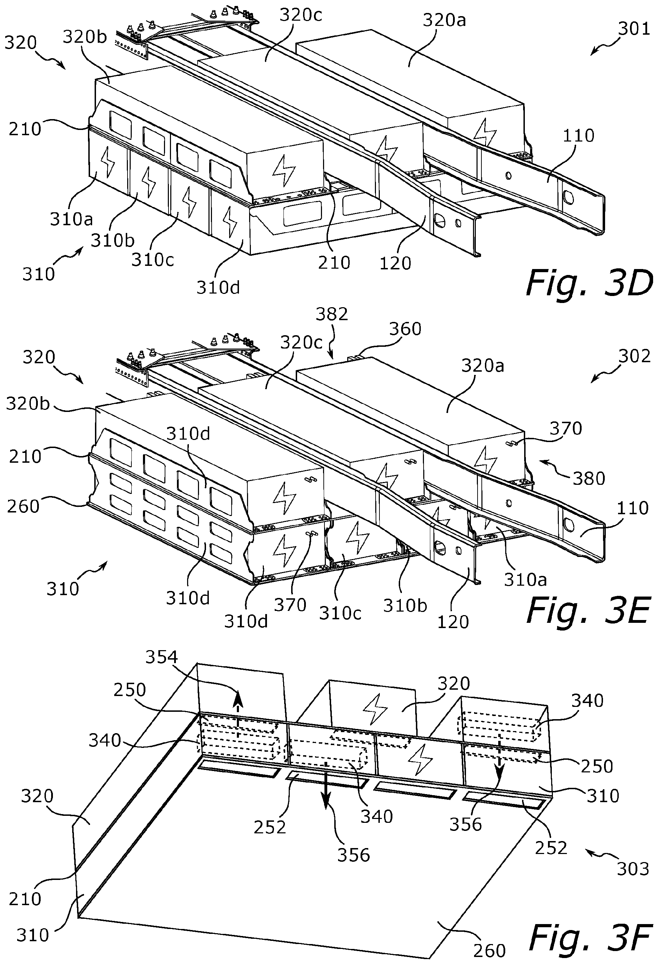

How the first plate 210 is further configured to ease serviceability and/or maintenance of the battery packs mounted thereto will now be described in more detail with reference also to FIGS. 3A and 3B, and various examples of how to mount battery packs to such a plate (as envisaged herein) will then be described in more detail with reference also to FIGS. 3C, 3D, 3E and 3F.

**FIG. 3A** schematically illustrates an example of a battery pack 310 (or 320) as envisaged herein, wherein the battery pack 310 includes at least one serviceable component 340 (such as a service box including electronics for controlling/operating the battery pack 310, and similar). An outer casing of the battery pack 310 is provided with one or more openings 350 and/or 352, such that the serviceable component 340 can be removed from the battery pack 310 in at least one of an upward direction 354 and a downward direction 356 (as indicated by the arrows in FIG. 3A). The openings 350 and 352 may preferably normally be closed using a lid or other type of seal, such that when not opened for removing the serviceable component 340, dust and other debris, and/or e.g. water, is prevented from entering into the battery pack 310. The directions 354 and 356 may be defined such that they are perpendicular to a major plane of extension of the first plate 210 (and/or second plate 260), wherein the major plane of extension is e.g. a plane parallel to a plane spanned by the longitudinal and transverse directions L and T of the chassis frame 100 when the first plate 210 (and optionally second plate 260) is mounted to the chassis frame 100 as envisaged herein.

**FIG. 3B** schematically illustrates a mounting plate 210 (i.e. a first plate 210) as envisaged herein, wherein the first plate 210 is further provided with one or more cutouts 250 that allow the one or more serviceable components 340 of the battery packs 310 (or 320) to be removed from the battery packs 310, 320 through the one or more cutouts 250, without first having to dismantle/remove the corresponding battery pack from the first plate 210. For example, a battery pack 310 mounted suspended from below the first plate 210 may have its serviceable component 340 removed upwards 354 through a corresponding cutout 250. Likewise, a battery pack 320 mounted on top of the first plate 210 may have its serviceable component 340 removed downwards 356 through a corresponding cutout 250, as both illustrated in FIG. 3B. The locations of the one or more cutouts 250 may for example be such that they, when the battery packs 310, 320 are mounted to the first plate 210, match the location of the corresponding openings 350, 352 of the battery pack enclosures/housings, and/or such that the openings 350, 352 of the battery packs 310, 320 may be aligned with the one or more cutouts 250 by e.g. sliding (after e.g. unscrewing/unbolting) the battery packs 310, 320 in the longitudinal L and/or transverse T direction of the chassis frame 100.

**FIG. 3C** schematically illustrates an example installation/mounting platform 300 as envisaged herein. In the installation 300, a plurality of first battery packs 310a, 310b, 310c and 310d (jointly referred to as a first subset 310 of battery packs, or simply first battery packs 310) are mounted suspended from the bottom side 212 of the first plate 210. In addition, a plurality of second battery packs 320a and 320b (jointly referred to as second subset 320 of battery packs, or simply second battery packs 320) are mounted to the top side 214 of the first plate 210, on the outer sides of the longitudinal beams 110 and 120, respectively (e.g. on both the left lateral side 134 and the right lateral side 136 of the chassis frame). Each of the first battery packs 310 may for example be referred to as a "battery under frame" (BUF), while each of the second battery packs 320 may for example be referred to as a "battery outside frame" (BOF). In this particular example, the battery packs 310 and 320 are all of same or similar dimension/type, which may be beneficial in that only a single type of battery pack is needed in the vehicle. In this particular example, the first battery packs 310 are each oriented along the transverse direction T of the chassis frame 100, while each of the second battery packs 320 are oriented along the longitudinal direction of the chassis frame 100. Orienting the first and second battery packs cross-wise may have the benefit of added structural strength/rigidity to the overall installation 300.

**FIG. 3D** schematically illustrates another example installation 301 as envisaged herein. In the installation 301, everything is the same as in the installation 300 except that an additional second battery pack 320c is provided on the top side 214 of the first plate 210 (as part of the second subset 320 of battery packs), and arranged in a space formed between the longitudinal beams 110 and 120 of the chassis frame 100. The battery pack 320c may for example be referred to as a "battery inside frame" (BIF). Placing the battery pack 320c within the space between the beams 110 and 120 may further increase the energy storage density of the installation 301 compared to the installation 300.

As envisaged herein, a "battery pack" may include multiple battery modules, or e.g. be formed from multiple smaller battery packs (such as multiple so-called flat packs) stacked on top of each other. A benefit of using flat packs is that such flat packs may be the ones used in smaller vehicles such as electric automobiles, and in that only a single type of (flat) battery pack may then be produced and used both in smaller (automobiles) and larger (heavy-duty) vehicles, which may reduce production costs as larger production volumes of a same entity often drives costs down.

**FIG. 3E** schematically illustrates another example installation 302 as envisaged herein. FIG. 3E serves to illustrate two additional concepts of the present disclosure, that may be combined, or each used on its own.

The first such additional concept includes providing an additional, second plate 260 below the first subset 310 of battery packs (such as battery packs 3 10a-d), where the first battery packs 310 are mounted to a top side of the second plate 260. The second plate 260 may for example provide additional structural strength/rigidity to the overall installation 302, but may also facilitate the installation/removal of the first battery packs 310. The second plate 260 may also serve as a mounting platform for e.g. one or more crash protection devices (such as side-impact protection barriers), which could then be mounted to the second plate 260 instead of to e.g. the battery packs themselves, thereby further improving crash safety.

The second such additional concept includes orienting each of the first battery packs 310 along the longitudinal direction L of the chassis frame 100, such that the first and second battery packs 310 and 320 are all oriented in the same longitudinal direction L. This may be advantageous in that a same type of battery pack may be used for both the first and second battery packs 310 and 320, and in particular in that connectors 370 for cooling fluid and connectors 360 for electricity may be arranged on opposite sides of the battery packs in the longitudinal direction L. For example, the connectors 370 for cooling fluid may be arranged on a front side 380 of the battery packs, and the connectors 360 for electricity may be arranged on an opposite back side 382 of the battery packs. This may be advantageous in that the part of the vehicle responsible for cooling the cooling fluid to/from the battery packs is often located towards the front of the vehicle, to e.g. utilize air flow for cooling, while the part of the vehicle responsible for electrically propelling the vehicle (such as one or more electrical machines, high-voltage inverters, and similar) are often located towards the rear of the vehicle. Routing of conductors for cooling fluid and electricity is thus made more convenient as no routing of conductors are e.g. needed on the lateral sides (e.g. left and right) of the battery packs and similar. This also has the advantage that separation of cooling fluid and electricity is obtained, which improves safety as it reduces the risk of e.g. cooling fluid coming into contact with conductors/connectors under high voltage. In other examples, it may of course be the other way around, such that the connectors 370 for cooling fluid are instead provided at the back side 382 and the connectors 360 for electricity are provided at the front side 380 of the battery packs 310 and 320.

**FIG. 3F** schematically illustrates how, in an installation 303 including both the first and second plates 210 and 250, the second plate 260 may also be provided with one or more cutouts 252, such that one or more serviceable components 340 of the battery packs 310 mounted on top of the second plate 260 may be removed through the one or more cutouts 252 in the downward direction 356, without having to first dismount e.g. the battery packs 310 from the second plate 260. In an installation such as the installation 303, in some examples, serviceable components 340 of the first battery packs 310 may also be removed via cutouts 250 in the first plate 250, if the battery packs are such that this is possible. Phrased differently, by providing cutouts 252 in the second plate 260, the same functionality regarding how to remove the serviceable components 340 may be obtained even with the additional second plate 260 in place.

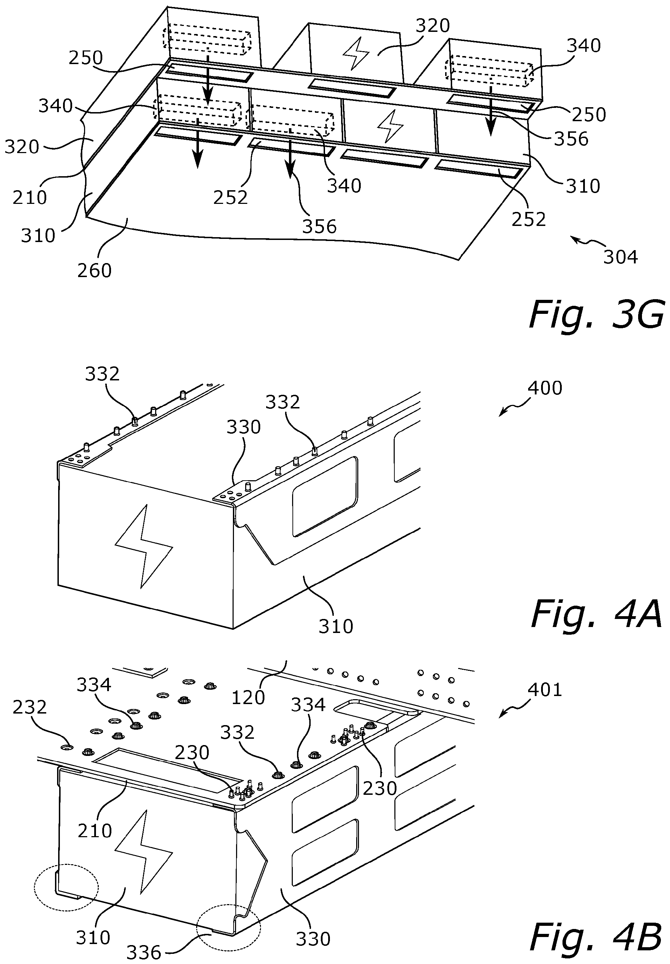

**FIG. 3G** schematically illustrates another example installation 304, wherein the first plate 210 and the battery packs 320 are such that the first plate 210, its cutouts 250 and the battery packs 320 mounted on the first plate 210 extend outside of the battery packs 310 (and e.g. the second plate 260) in the longitudinal direction L of the chassis frame 100. In this example, the cutouts 250 (and the serviceable components 340 of the battery packs 320) are thus directly accessible from below, without having to first remove any of the battery packs 310 and the second plate 260. Such a configuration may be provided by e.g. making the length (in the longitudinal direction L) of the battery packs 320 and first plate 210 different from that of the battery packs 310 (and e.g. second plate 260), such that the battery packs 310 are made shorter in this direction than the battery packs 320. Another envisaged solution to achieve the same effect includes a "staggered configuration", wherein the battery packs 320 and first plate 210 are instead (or in addition) shifted (in position) in the longitudinal direction L relative to the battery packs 310 (and e.g. second plate 260). It is noted that the example 304 may also, in some examples, be provided without the second plate 260, i.e. the staggered configuration and/or battery packs 310 being shorter than the battery packs 320 (and first plate 210) is also possible.

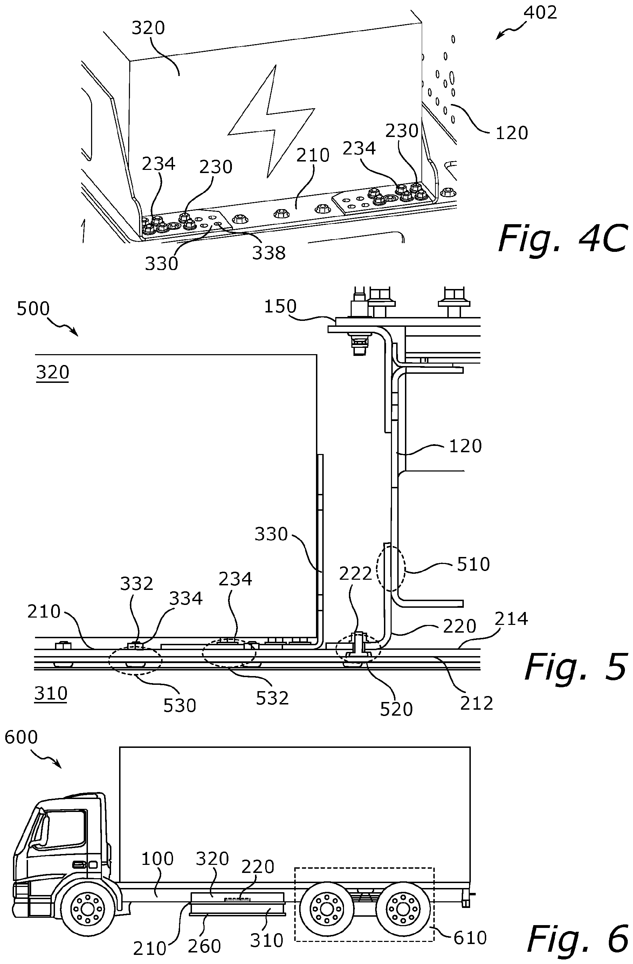

Various envisaged ways of mounting the battery packs to the first plate 210 (and/or to the second plate 260) will now be described in more detail with reference also to FIGS. 4A, 4B and 4C.

**FIG. 4A** schematically illustrates an example arrangement 400 of a (first) battery pack 310 as envisaged herein, wherein the battery pack 310 is provided with one or more mounting brackets 330. As the first plate 210 to which the battery pack 310 is mounted provides structural rigidity and strength, the mounting bracket(s) 330 can be made more lightweight than if the mounting bracket 330 was to mount the battery pack 310 directly to the chassis frame 100 of the vehicle. For example, the battery pack 310 may be provided with two mounting brackets 330 (one on each side), or there may be provided only a single mounting bracket 330 for the battery pack 310. As envisaged herein, the one or more mounting brackets 330 can be provided as additional/extra components, or be integrated and form part of the battery pack 310 itself. Each mounting bracket 330 may be provided with screws or bolts 332, such as e.g. press screws, that may fit inside the plurality of holes 232 in the first plate 210 as illustrated in FIG. 2. In this particular example, the mounting bracket 330 does not extend outside the battery pack 310 in the longitudinal direction of the battery pack 310, such that access to the screws/bolts 332 once the battery pack 310 is mounted to the first plate is only available from above the first plate 210. In other examples, it is envisaged that the mounting bracket 330 may extend outside the battery pack 310 in the longitudinal direction of the battery pack, such that access to at least some of the screws/bolts 332 may be made possible also from e.g. below the first plate 210, which may further ease the process of mounting or dismounting the battery pack 310 to or from the first plate 210.

**FIG. 4B** schematically illustrates an example arrangement 401 of the (first) battery pack 310 being mounted (using the one or more mounting brackets 330) to the first plate 210, such that the battery pack 310 is suspended below the first plate 210. The screws/bolts 332 of the battery pack 310/mounting bracket 330 have been inserted through the holes 232 of the first plate 210, and fastened using suitable nuts 334. In this example, the mounting bracket 330 is suitable for also mounting the battery pack 310 to the top side of the second plate 260, if such a second plate 260 is included as part of the installation. Although not explicitly shown in FIG. 4B, this may include e.g. one or more screws and/or bolts in for example regions 336 of the bracket 330, such that these screws and/or bolts may be inserted into corresponding holes of the second plate 260 and fastened to the second plate 260 using e.g. corresponding nuts. In other examples, it is envisaged that the bracket 330 may extend outside the battery pack e.g. in the longitudinal direction of the battery pack, and for example be provided with holes to receive corresponding screws and/or bolts of the second plate 260. In any way, the combination of extending screws and/or bolts in one part (e.g. battery pack) and corresponding holes in the other part (e.g. plate) allows for guidance of the battery pack and/or plate while joining the two together, thus facilitating the mounting or dismounting process.

**FIG. 4C** schematically illustrates an example arrangement 402 of a (second) battery pack 320, that is also provided with (or includes) a mounting bracket 330 for mounting the battery pack 320 to the first plate 210. Here, the mounting bracket 330 is provided with holes 338 arranged to receive the screws and/or bolts 230 of the first plate 210, such that the bracket 330 and battery pack 320 can be secured to the first plate 210 using suitable nuts 234 or similar. In this example, it is seen how the bracket 330 may be such that it extends outside of the battery pack 320 in the longitudinal direction of the latter (which may or may not correspond to the longitudinal direction L of the chassis frame 100), such that access to the fastening means for securing the battery pack 320 to the first plate 210 is made more available. In FIG. 4C, it can also be seen that such a mounting bracket 330 further allows access to e.g. the screws and/or bolts 332 (and corresponding nuts 334) used to secure one or more of the first battery packs through the holes 232 of the first plate 210, which enables to e.g. mount or dismount the first battery packs below the first plate 210 without first having to remove the second battery packs 320 from on top of the first plate 210. The solution illustrated in FIG. 4C may also be used for mounting battery packs to the second plate 260, if present, such as one or more of the first battery packs 310.

In general, the envisaged solution including the first plate 210 facilitates the mounting or dismounting of individual battery packs to/from the vehicle. In particular, the envisaged solution enables to individually install/remove at least some of the first and second sets 310 and 320 of battery packs without first having to remove one or more other battery packs. For example, to remove a BOF such as 320a and 320b, it is possible to just remove the nuts 234 and then either lift the battery pack up fully, or to e.g. lift the battery pack up slightly and then remove the battery side to the side (i.e. to the left or right). To remove a BUF such as 3 10a to 3 10d, it may first be necessary to remove the BOF battery packs 320a and 320b such that access to all fastening means (such as screws/bolts 332 and nuts 334) is made available. The BUF battery packs may then be unsecured and lowered from the first plate 210. To remove the BIF such as 320c, it may be necessary to first remove the BOF battery packs, and then the whole platform (including the first plate 210) can be released from the chassis frame 100 and lowered together, which may facilitate service and maintenance of the battery packs. If the vehicle is e.g. a box truck or has anything else on top of the chassis frame 100, the envisaged solution still allows access to all battery packs. For example, the BIF battery pack may still be unsecured as access to e.g. the screws/bolts 332 and nuts 334 is still available, and then be slid out in the longitudinal direction L of the chassis frame 100. If not possible to perform such sliding due to space restrictions, the BIF battery pack may instead be lowered together with the first plate 210 and the BUF battery packs. Consequently, the envisaged solution is such that it enables to remove at least some of the top and bottom (e.g. second and first sets of) battery packs individually, and also enables to remove at least some of the battery packs (such as the first battery packs) simultaneously by releasing the first plate 210 from the chassis frame 100.

Although having been illustrated using a particular type of battery packs and a particular dimension, the first plate 210 may of course be adapted to fit the battery packs that are available, and it also allows for combinations of battery packs of different dimensions and/or types, if desirable. The envisaged solution is thus highly flexible. The height of the platform may be changed by altering the height/dimensions of e.g. the mounting bracket(s) 220 used to secure the first plate 210 to the chassis frame 100, and the positioning of the first plate 210 relative the chassis frame 100 is also easily adjusted by e.g. moving the mounting brackets 220 or similar.

**FIG. 5** schematically illustrates further examples of how an installation 500 as envisaged herein may include one or more damping elements in order to avoid vibrations being propagated into the battery packs. In one example, one or more damping elements (such as rubber bushings, or similar) may be provided in an area 510 between the chassis frame 100 (e.g. between the longitudinal beams, such as the right longitudinal beam 120) and the mounting bracket(s) 220 used to secure the first plate 210 to the chassis frame 100, and thereby prevent (or reduce the effects of) vibrations propagating from the chassis frame 100 to the mounting bracket(s) 220. In one example, one or more damping elements may instead, or in addition, be provided in an area 520 between the mounting bracket(s) 220 and the first plate 210, and thereby prevent (or reduce the effects of) vibrations propagating from the mounting bracket(s) 220 to the first plate 210. In one example, one or more damping elements may instead, or in addition, be provided in an area 530 between the first plate 210 and the (mounting bracket(s) 330 of the) first battery packs 310, and/or in an area 532 between the first plate 210 and the (mounting bracket(s) 330 of the) second battery packs 320, thereby preventing (or reducing the effects of) vibrations propagating from the first plate 210 to one or more of the first and second (sets of) battery packs 310 and 320. In general, one or more damping elements may thus be provided to overall prevent (or reduce the effect of) vibrations propagating from the chassis frame 100 to the first and/or second battery packs 310 and 320, which may serve to reduce unnecessary wear of the battery packs 310 and/or 320 themselves and/or the various structures used to secure the battery packs 310 and/or 320 to the chassis frame 100 and vehicle.

**FIG. 6** schematically illustrates an example vehicle 600 as envisaged herein, here in form of a box truck (e.g. a truck with a fixed cargo-space mounted to the truck). The vehicle 600 includes the chassis frame 100, the first plate 210 mounted to the chassis frame 100 using the one or more mounting brackets 220, and the first and second (sets of) battery packs 310 and 320 mounted to the bottom and top side of the first plate 210, respectively, as described herein. Optionally, the vehicle 600 may also include the second plate 260 mounted below the first battery packs 310. The vehicle 600 has an electric traction (e.g. including one or more electrical machines) 610 for propelling the vehicle 600. The first and second battery packs 310 and 320 are arranged to provide electrical power to the electrical traction 610.

Although illustrated in FIG. 6 as a (box) truck, a heavy-duty electric vehicle as envisaged herein may include any type of vehicle that has a chassis frame and requires mounting thereto of a plurality of battery packs. For example, the vehicle may be a construction equipment such as an excavator, dump truck, tractor, or similar, or e.g. some other form of truck such as a tow truck for a semitrailer or vehicle combination, a bus, or similar, that is or is to be electrified.

In summary of all of the above, the present disclosure improves upon currently available technology in that it provides a more flexible solution/platform for mounting of a plurality of battery packs to a chassis frame of a heavy-duty vehicle, which further allows to better utilize the available space in order to increase energy storage density, and which in particular allows for more easy access to serviceable components of the battery packs. This is achieved by avoiding e.g. the mounting of each battery pack individually to the chassis frame, but by instead providing a same, single platform in form of the first plate 210 that is commonly shared by all of the battery packs, and by providing the one or more cutouts 250 in the first plate 210. As the shape of the first plate 210 is such that it consumes minimal space, more space is made available for the battery packs which increases energy storage density. In general, the first (and e.g. second) plate is simple to fabricate, contains no or very few moving parts, and is thus easy to install and less prone to failure. The first plate allows individual battery packs to be removable without first having to remove all battery packs, such as otherwise needed in case of e.g. battery pack matrices or similar, which makes both service and maintenance of the battery packs and vehicle as a whole easier. In particular, the cutouts 250 allow serviceable components of the battery packs to be removed without having to e.g. unscrew (or release any other meanings of fastening) the battery pack from the first plate 210 and remove it. The first plate 210 further allows, by enabling placement of battery packs both on top on and below of the first plate 210, for an increased safety as e.g. side impacts of the vehicle are less likely to cause the battery packs being ripped off from the vehicle. This because the first plate 210 and the mounting thereon of battery packs on both sides allows to place the combined center of gravity of the battery packs (in the vertical direction) closer to or at the chassis frame 100. As the first plate 210 and the battery packs work together to increase the overall structural strength and rigidity of the solution, the first plate 210 itself can be made thinner and is thus less likely to interfere with the desired flexing of the chassis frame. Other advantageous of the proposed solution are of course also possible, and it is envisaged that the skilled person would be capable of arriving at such conclusions by studying of the description, drawings and appended claims of the present disclosure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A heavy-duty electric vehicle (600), including: - a chassis frame (100); - a set of one or more plates (210, 260) each directly or indirectly mounted to the chassis frame, and - a set of battery packs (310, 320) for powering an electric traction (610) of the vehicle and mounted to at least one of the one or more plates, wherein for at least one battery pack of the set of battery packs, at least one serviceable component (340) of the battery pack is removable from the battery pack, and wherein at least one plate of the set of one or more plates to which the battery pack is mounted is provided with a cutout (250, 252), such that the at least one component can be taken out from the battery pack through the cutout without first separating the battery pack and the plate from each other.
Example 2: The vehicle of example 1, wherein the at least one serviceable component is removable from the battery pack in a direction (354, 356) normal to a major extension plane of the plate.
Example 3: The vehicle of example 1 or 2, wherein the set of one or more plates includes a first plate (210) mounted to the chassis frame using one or more mounting brackets (220).
Example 4: The vehicle of example 3, wherein the first plate is mounted to each of a pair of longitudinal beams (110, 120) of the chassis frame using the one or more mounting brackets.
Example 5: The vehicle of example 3 or 4, further including one or more damping elements (510) provided between the chassis frame and the one or more mounting brackets.
Example 6: The vehicle of any one of examples 3 to 5, further including one or more damping elements (520) provided between the one or more mounting brackets and the first plate.
Example 7: The vehicle of any one of examples 3 to 6, wherein the first plate is provided with cutouts (240) at the chassis frame to account for torsional deformations of the chassis frame.
Example 8: The vehicle of example 7 depending on example 4, wherein the first plate is provided with cutouts at each of the longitudinal beams at a front side of the first plate and at each of the longitudinal beams at a back side of the first plate.
Example 9: The vehicle of any one of examples 3 to 8, wherein the first plate is mounted at a longitudinal (L) center of the chassis frame.
Example 10: The vehicle of any one of examples 3 to 9, wherein the set of battery packs includes a first subset (310) of battery packs suspended from a bottom side (212) of the first plate.
Example 11: The vehicle of example 10, wherein the battery packs of the first subset of battery packs are oriented along a longitudinal direction (L) of the chassis frame.
Example 12: The vehicle of example 10, wherein the battery packs of the first subset of battery packs are oriented along a transverse direction (T) of the chassis frame.
Example 13: The vehicle of any one of examples 10 to 12, wherein the set of one or more plates includes a second plate (260), wherein the first subset of battery packs are mounted to a top (252) side of the second plate, wherein for at least one battery pack of the first subset of battery packs, at least one serviceable component (340) of the battery pack is removable from the battery pack, and wherein the second plate is provided with a cutout (252), such that the at least one serviceable component of the battery pack can be taken out from the battery pack through the cutout of the second plate without first separating the battery pack of the first subset of battery packs and the second plate from each other.
Example 14: The vehicle of any one of examples 3 to 13 wherein the set of battery packs includes a second subset (320) of battery packs mounted to a top side (214) of the first plate. Example 15: The vehicle of example 14 depending on example 4, wherein at least one battery pack (320c) of the second subset of battery packs is arranged between the longitudinal beams. Example 16: The vehicle of example 14 or 15, wherein at least one battery pack (320a) of the second subset of battery packs is arranged on a first lateral side (134) of the chassis frame and at least one battery pack (320b) of the second subset of battery packs is arranged on an opposite second lateral side (136) of the chassis frame.
Example 17: The vehicle of any one of examples 14 to 16, wherein the second subset of battery packs, the first plate and the cutouts of the first plate extend outside of the first subset of battery packs in the longitudinal direction of the chassis frame.
Example 18: The vehicle of any one of examples 14 to 17, wherein a combined center of gravity of the first and second subsets of battery packs aligns with the first plate and/or chassis frame in a vertical direction of the chassis frame.
Example 19: The vehicle of any one of the preceding examples, wherein at least some battery packs of the set of battery packs are provided with brackets (330) for mounting to said at least one of the one or more plates.
Example 20: The vehicle of any one of the preceding examples, further comprising one or more damping elements (530, 532) provided between at least one plate in the set of one or more plates and at least one battery pack in the set of one or more battery packs.
Example 21: The vehicle of any one of the preceding examples, further comprising at least one of a busbar for transferring electric power to/from at least one battery pack and a cooling fluid conduit for transferring cooling fluid to/from at least one battery pack, wherein said busbar and/or cooling conduit are/is arranged in a space formed between the chassis frame and the set of battery packs.
Example 22: A battery mounting platform for a heavy-duty electric vehicle as described herein, including the set of one or more plates each directly or indirectly mountable to a chassis frame of the vehicle, wherein a set of battery packs for powering an electric traction of the vehicle are mountable to at least one of the one or more plates, and wherein at least one plate of the set of one or more plates is provided with at least one cutout, such that when the battery packs are mounted to the at least one plate, a serviceable component of at least one battery pack can be taken out from the battery pack through the cutout without first separating the battery pack and plate from each other.
Example 23: An energy storage system for a heavy-duty electric vehicle as described herein, including the set of battery packs for powering an electric traction of the vehicle and the battery mounting platform of example 22, wherein the set of battery packs is mounted to at least one of the one or more plates.

## Claims

1. A heavy-duty electric vehicle (600), comprising:
- a chassis frame (100);
- a set of one or more plates (210, 260) each directly or indirectly mounted to the chassis frame, and
- a set of battery packs (310, 320) for powering an electric traction (610) of the vehicle and mounted to at least one of the one or more plates,
wherein for at least one battery pack of the set of battery packs, at least one serviceable component (340) of the battery pack is removable from the battery pack, and wherein at least one plate of the set of one or more plates to which the battery pack is mounted is provided with at least one cutout (250, 252), such that the at least one component can be taken out from the battery pack through the cutout without first separating the battery pack and the plate from each other.

2. The vehicle of claim 1, wherein the at least one serviceable component is removable from the battery pack in a direction (354, 356) normal to a major extension plane of the plate.

3. The vehicle of claim 1 or 2, wherein the set of one or more plates comprises a first plate (210) mounted to the chassis frame using one or more mounting brackets (220).

4. The vehicle of claim 3, wherein the first plate is mounted to each of a pair of longitudinal beams (110, 120) of the chassis frame using the one or more mounting brackets.

5. The vehicle of claim 3 or 4, wherein the first plate is provided with cutouts (240) at the frame chassis to account for torsional deformations of the frame chassis.

6. The vehicle of any one of claims 3 to 5, wherein the first plate is mounted at a longitudinal (L) center of the chassis frame.

7. The vehicle of any one of claims 3 to 6, wherein the set of battery packs comprises a first subset (310) of battery packs suspended from a bottom side (212) of the first plate.

8. The vehicle of claim 7, wherein the battery packs of the first subset of battery packs are oriented along a longitudinal direction (L) of the chassis frame.

9. The vehicle of claim 7, wherein the battery packs of the first subset of battery packs are oriented along a transverse direction (T) of the chassis frame.

10. The vehicle of any one of claims 7 to 9, wherein the set of one or more plates comprises a second plate (260), wherein the first subset of battery packs are mounted to a top side of the second plate, wherein for at least one battery pack of the first subset of battery packs, at least one serviceable component (340) of the battery pack is removable from the battery pack, and wherein the second plate is provided with a cutout (252), such that the at least one serviceable component of the battery pack can be taken out from the battery pack through the cutout of the second plate without first separating the battery pack of the first subset of battery packs and the second plate from each other.

11. The vehicle of any one of claims 3 to 10 wherein the set of battery packs comprises a second subset (320) of battery packs mounted to a top side (214) of the first plate.

12. The vehicle of claim 11 depending on claim 4, wherein at least one battery pack (320c) of the second subset of battery packs is arranged between the longitudinal beams.

13. The vehicle of claim 11 or 12, wherein at least one battery pack (320a) of the second subset of battery packs is arranged on a first lateral side of the chassis frame and at least one battery pack (320b) of the second subset of battery packs is arranged on an opposite second lateral side of the chassis frame.

14. The vehicle of any one of claims 11 to 13, wherein the second subset of battery packs, the first plate and the cutouts of the first plate extend outside of the first subset of battery packs in the longitudinal direction of the chassis frame.

15. The vehicle of any one of the preceding claims, wherein at least some battery packs of the set of battery packs are provided with brackets (330) for mounting to said at least one of the one or more plates.

## Amended claims

### Amended claims in accordance with Rule 137(2) EPC.

1. A heavy-duty electric vehicle (600), comprising:
- a chassis frame (100);
- a mounting platform (200) for battery packs, comprising a set of one or more plates (210, 260) separate from the chassis frame but each directly or indirectly mounted to the chassis frame and having a major plane of extension parallel to a plane spanned by a longitudinal direction (L) and a transverse direction (T) of the chassis frame, and
- a set of battery packs (310, 320) for powering an electric traction (610) of the vehicle, each battery pack being either mounted suspended from a bottom side, or mounted to a top side, of at least one of the one or more plates,
wherein for at least one battery pack of the set of battery packs, at least one serviceable component (340) of the battery pack is removable from the battery pack, and wherein at least one plate of the set of one or more plates to which the battery pack is mounted is provided with at least one cutout (250, 252), such that the at least one component can be taken out from the battery pack through the cutout along a direction normal to the major plane of extension of the plate and without first separating the battery pack and the plate from each other.

2. The vehicle of claim 1, wherein the set of one or more plates comprises a first plate (210) mounted to the chassis frame using one or more mounting brackets (220).

3. The vehicle of claim 2, wherein the first plate is mounted to each of a pair of longitudinal beams (110, 120) of the chassis frame using the one or more mounting brackets.

4. The vehicle of claim 2 or 3, wherein the first plate is provided with cutouts (240) at the frame chassis to account for torsional deformations of the frame chassis.

5. The vehicle of any one of claims 2 to 4, wherein the first plate is mounted at a longitudinal (L) center of the chassis frame.

6. The vehicle of any one of claims 2 to 5, wherein the set of battery packs comprises a first subset (310) of battery packs suspended from a bottom side (212) of the first plate.

7. The vehicle of claim 6, wherein the battery packs of the first subset of battery packs are oriented along the longitudinal direction (L) of the chassis frame.

8. The vehicle of claim 6, wherein the battery packs of the first subset of battery packs are oriented along the transverse direction (T) of the chassis frame.

9. The vehicle of any one of claims 6 to 8, wherein the set of one or more plates comprises a second plate (260), wherein the first subset of battery packs are mounted to a top side of the second plate, wherein for at least one battery pack of the first subset of battery packs, at least one serviceable component (340) of the battery pack is removable from the battery pack, and wherein the second plate is provided with a cutout (252), such that the at least one serviceable component of the battery pack can be taken out from the battery pack through the cutout of the second plate along a direction normal to the major plane of extension of the second plate and without first separating the battery pack of the first subset of battery packs and the second plate from each other.

10. The vehicle of any one of claims 2 to 9 wherein the set of battery packs comprises a second subset (320) of battery packs mounted to a top side (214) of the first plate.

11. The vehicle of claim 10 depending on claim 3, wherein at least one battery pack (320c) of the second subset of battery packs is arranged between the longitudinal beams.

12. The vehicle of claim 10 or 11, wherein at least one battery pack (320a) of the second subset of battery packs is arranged on a first lateral side of the chassis frame and at least one battery pack (320b) of the second subset of battery packs is arranged on an opposite second lateral side of the chassis frame.

13. The vehicle of any one of claims 10 to 12, wherein the second subset of battery packs, the first plate and the cutouts of the first plate extend outside of the first subset of battery packs in the longitudinal direction of the chassis frame.

14. The vehicle of any one of the preceding claims, wherein at least some battery packs of the set of battery packs are provided with brackets (330) for mounting to said at least one of the one or more plates.
